# EUROPÄISCHE PATENTANMELDUNG

(11) **EP 3 686 295 A1**
(43) Veröffentlichungstag der Anmeldung: **29.07.2020**
(21) Anmeldenummer: 20157919.0
(22) Anmeldetag: 15.07.2015
(51) Int. Cl.: C21D 9/02, C21D 8/06

(54) **VERFAHREN ZUM HERSTELLEN VON WARMGEFORMTEN STAHLFEDERN**

(30) Priorität: 04.09.2014 DE 102014112762; 04.09.2014 DE 102014112761
(62) Teilanmeldung aus: 15744892.9
(71) Anmelder: Thyssenkrupp Federn und Stabilisatoren GmbH, 58119 Hagen (DE); thyssenkrupp AG, 45143 Essen (DE)
(72) Erfinder: Lechner, Dieter, 40470 Düsseldorf (DE); Groß, Marcel, 44359 Dortmund (DE); Gabor, Heinz-Georg, 58300 Wetter (DE); Roland, Marco, 44287 Dortmund (DE); Brier, Dieter, 58791 Werdohl (DE)
(74) Vertreter: thyssenkrupp Intellectual Property GmbH

(57) **Zusammenfassung**

Die vorliegende Erfindung betrifft eine Feder (3') oder einen Drehstab (3") hergestellt aus einem Stahldraht (1) durch Warmumformen (18, 18', 18") nach einem Verfahren mit den folgenden Schritten:
a) Bereitstellen eines Stahldrahts (1);
b) Thermomechanisches Umformen (12) des in Schritt a) bereitgestellten Stahldrahts (1);
c) Abkühlen (13) des in Schritt b) thermomechanisch umgeformten Stahldrahts (1);
d) Ablängen (16) des in Schritt c) abgekühlten Stahldrahts (1) zu Stäben (2);
e) Erwärmen (17) der in Schritt d) abgelängten Stäbe (2);
f) Warmumformen (18, 18', 18") der in Schritt e) erwärmten Stäbe (2);
g) Vergüten der in Schritt f) zu einer Feder (3') oder einem Drehstab (3") warmumgeformten Stäbe, umfassend
I. Abschrecken (19) der in Schritt f) zu einer Feder (3') oder einem Drehstab (3") warmumgeformten Stäbe auf eine erste Abkühltemperatur;
II. Wiedererwärmen der in Schritt I. abgeschreckten Feder (3') oder des Drehstabs (3") auf eine erste Anlasstemperatur;
III. Abkühlen der in Schritt II. wiedererwärmten warmumgeformten Feder (3') oder Stabs (2) auf eine zweite Abkühltemperatur;

wobei beim Abkühlen (13) des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.

## Beschreibung

Die vorliegende Erfindung betrifft warmgeformte Federn und/oder Drehstäbe, ein Verfahren zum Herstellen von warmgeformten Federn und/oder Drehstäben und die Verwendung eines Stahldrahtes zur Herstellung von warmgeformten Federn und/oder Drehstäben.

### Stand der Technik

Federn und Drehstäbe aus verformtem Stahldraht sind im Stand der Technik in einer Vielzahl von Ausführungsformen bekannt. Drehstäbe werden beispielsweise auch als Drehstabfedern, Stabilisierungsdrehstäbe oder Torsionsfederstäbe bezeichnet. Eingesetzt werden Stahlfedern und Drehstabfedern insbesondere in Kraftfahrzeugen, wobei Stahlfedern beispielsweise in Dämpfungssystemen zur Dämpfung von Fahrbahnunebenheiten und Drehstabfedern zur Stabilisierung gegen Neigung und Verwindung der Karosserie insbesondere bei Kurvenfahrt eines Kraftfahrzeugs, Fahrten eines Kraftfahrzeugs über wechselnde Fahrbahnoberflächen und bei Fahrbahnunebenheiten eingesetzt werden. Die Formgebung des Stahldrahts zu Federn und Drehstäben kann nach einem Kalt- und/oder Warmumformverfahren erfolgen. Vor dieser Formgebung kann der Stahldraht verschiedene Vorbereitungsschritte erfahren, welche die Feder- und- Festigkeitseigenschaften beeinflussen. Beispielsweise wird der zur Herstellung einer Stahl- und/oder Drehstabfeder verwendete Federstahl einer thermomechanischen Umformung (TMU) unterzogen, um dessen konstruktiv nutzbare Festigkeit und Zähigkeit zu erhöhen und weitere bestimmte Gebrauchseigenschaften eines Werkstoffs zu verbessern. So können Federn und/oder Drehstäbe mit hoher/n Festigkeit(en) bei vergleichsweise geringem Materialeinsatz und somit geringem Gewicht und Materialkosten hergestellt werden. Im Stand der Technik sind eine Reihe verschiedener Verfahren, welche eine thermische Behandlung und dann eine Umformung umfassen, bekannt. Bei einer Kaltverformung ist die Verformbarkeit des Stahldrahtes begrenzt, da infolge von Kaltverfestigung seine Zähigkeit und Verformbarkeit mit steigendem Verformungsgrad abnimmt.

Bei der Serienproduktion von warmgeformten Schraubenfedern wird die TMU bereits in Form eines Schrägwalzprozesses eingesetzt, hier allerdings nur an vorgefertigten, vereinzelten Federstäben. Ein solches Verfahren ist in der DE 103 15 418 B3 offenbart. Die TMU erfolgt am Federstab durch einen einstufigen Schrägwalzprozess direkt vor dem Warmwickeln der Schraubenfeder. Die warmgeformte Feder wird in Öl abgeschreckt, wodurch sich ein martensitisches Gefüge ausbildet.

In der DE 198 39 383 C2 ist ein Verfahren zur thermomechanischen Behandlung von Stahl für torsionsbeanspruchte Federelemente beschrieben. Ein Ausgangsmaterial wird zügig auf eine Temperatur von 1080°C erhitzt und austenitisiert. Anschließend wird das Ausgangsmaterial einer TMU unterzogen, wodurch eine Rekristallisation erreicht wird. Anschließend, ohne zwischenzeitliche Abkühlung, wird das Ausgangsmaterial durch Abschrecken gehärtet.

Dieses Verfahren wird in einer integralen Fertigungsstraße durchgeführt, in der von der TMU bis zur Abschreckung sämtliche Schritte durchgeführt werden. Durch die damit erforderliche unmittelbare Verkettung von thermomechanischer Umformung und Vergütung ergeben sich die folgenden Nachteile:
1. Längenänderungen am Draht durch die thermomechanische Umformung, zumeist Walzen, wirken sich unmittelbar auf die Prozessparameter der unmittelbar anschließenden Warmumformung und Vergütung aus.
2. Die Prozesszeiten und -temperaturen der thermomechanischen Umformung, der Warmwicklung und der Vergütung müssen aufeinander abgestimmt werden, was prozesstechnisch schwierig umzusetzen ist. Denn für die thermomechanische Umformung wird eine Temperatur lediglich knapp oberhalb der Austenitisierungstemperatur des Drahtwerkstoffs bevorzugt, während für das Warmumformen und das Vergüten ein Erhitzen auf eine deutlich höhere Temperatur vorteilhaft ist.
3. Zwischen der TMU und dem Warmwickeln sind weitere Bearbeitungsschritte am Stab erforderlich (beispielsweise das Schneiden auf exakte Länge), was die Zeit bis zur Abschreckhärtung verlängert. Daher wird der Stab geraume Zeit auf sehr hoher Temperatur gehalten, wodurch sich nachteilige Gefügeänderungen ergeben können, z.B. Kornwachstum und Entkohlung.
4. Die TMU und die Warmwickelvorrichtung weisen unterschiedliche Durchlaufzeiten pro Federstab auf. Der Durchsatz der Fertigungsstraße würde so durch die langsamste Prozesskomponente definiert; die schnelleren Prozesskomponenten sind so nicht ausgelastet und arbeiten daher unwirtschaftlich.
5. Ein Stillstand einer Prozesskomponente (z.B. für Wartung oder aufgrund eines Defekts) legt die gesamte Fertigungsstraße still.
6. Für jede Wickelanlage muss eine separate TMU-Einrichtung vorgehalten werden. Bei einer Vielzahl gleichzeitig zu fertigender Stahlfedern bedeutet das eine entsprechende Vielzahl von TMU-Einrichtungen.
7. Die Bearbeitung von Federstäben mit inkonstantem Drahtdurchmesser ist mit einer integralen Fertigungsstraße derzeit nicht oder nur unter erheblichem steuerungstechnischem Aufwand möglich.
8. Das in der Fertigung von Federn zur thermomechanischen Umformung angewendete einstufige Schrägwalzen (entsprechend der oben genannten DE 103 15 418 B3) führt zu einer Rotation des Drahtes um seine Längsachse mit einer Geschwindigkeit von 400 U/min und mehr. Dies lässt sich zwar mit vereinzelten Federstäben durchführen, nicht aber bei einem Endlosdraht. Zwar ist es bereits bekannt, anstelle des Schrägwalzens auch ein zweistufiges Kaliberwalzen zu verwenden. Die vorstehenden Nachteile 1 bis 7 bestehen auch bei der Anwendung des Kaliberwalzens.

Der vorliegenden Erfindung liegt daher die Aufgabe zugrunde, eine(n) verbesserte(n) Feder und/oder Drehstab und ein verbessertes Verfahren zum Herstellen der/s verbesserte(n) Feder und/oder Drehstabs bereitzustellen, bei welchem die zuvor genannten Nachteile umgangen werden. Insbesondere soll mit dem verbesserten Verfahren zum Herstellen der/s verbesserte(n) Feder und/oder Drehstabs ein stabiler Fertigungsprozess mit verlässlicher Erfüllung von hohen Qualitätsanforderungen zur Verfügung gestellt werden. Zudem soll das verbesserte Verfahren zum Herstellen der/s verbesserte(n) Feder und/oder Drehstabs einfach und sicher in bereits bestehende Verfahren implementiert werden können.

### Offenbarung der Erfindung

Diese Aufgabe wird mit einer Feder und/oder einem Drehstab nach Anspruch 1, und einem Verfahren nach Anspruch 5 gelöst. Vorteilhafte Weiterbildungen der Erfindung sind in den abhängigen Unteransprüchen angegeben.

Die erfindungsgemäße Feder weist gegenüber konventionellen Federn den Vorteil auf, dass der erfindungsgemäße Federdraht im Vergleich zu konventionellen Federdrähten eine höhere Zähigkeit aufweist. Aufgrund der höheren Zähigkeit des Federdrahts kann die erfindungsgemäße Feder mit höheren Spannungen beaufschlagt werden. Weitere Vorteile der erfindungsgemäßen Feder sind ein im Vergleich zu konventionellen Federn geringeres Gewicht und eine längere Lebensdauer. Zudem kann die Erfindungsgemäße Feder im Vergleich zu konventionellen Federn insbesondere mit kleineren Abmessungen und einer kürzeren Federlänge ausgelegt werden, womit die erfindungsgemäße Feder auch in kleinen Bauräumen angeordnet werden kann.

Der erfindungsgemäße Drehstab weist gegenüber konventionellen Drehstäben den Vorteil auf, dass der erfindungsgemäße Federdraht im Vergleich zu konventionellen Federdrähten eine höhere Zähigkeit aufweist. Aufgrund der höheren Zähigkeit des Federdrahts kann der erfindungsgemäße Drehstab mit höheren Spannungen beaufschlagt werden. Ein weiterer Vorteil des erfindungsgemäßen Drehstabs ist eine im Vergleich zu konventionellen Drehstäben längere Lebensdauer.

Das erfindungsgemäße Verfahren zum Herstellen von Federn und/oder Drehstäben weist gegenüber konventionellen Verfahren den Vorteil auf, dass die/der erfindungsgemäße Feder und/oder der Drehstab einen Federdraht mit einer im Vergleich zu konventionellen Federdrähten höheren Zähigkeit aufweisen. Ein weiterer Vorteil des erfindungsgemäßen Verfahrens ist, dass es in bereits bestehende Verfahren einfach und zuverlässig integriert werden kann. Zudem weist das erfindungsgemäße Verfahren die Vorteile auf, dass
- durch die prozesstechnische Trennung von TMU und Vergütung für jeden der beiden Schritte die optimalen Prozessparameter wie z.B. Temperaturen eingestellt werden können,
- durch die prozesstechnische Trennung von TMU von den nachfolgenden Fertigungsschritten für jeden der Schritte die optimalen Durchlaufgeschwindigkeiten eingestellt werden können,
- eventuell zusätzlich notwendige Bearbeitungsschritte am Stahldraht und/oder Stab wie beispielsweise das präzise Schneiden auf eine gewünschte Länge oder die Herstellung inkonstanter Stahldraht- und/oder Stabdurchmesser vorgenommen werden können, ohne die Verfahrenszeit bis zur Abschreckhärtung zu verlängern,
- die Gefahr, dass es im Stahldraht und/oder Stab zu nachteiligen Gefügeveränderungen infolge langen Haltens auf sehr hoher Temperatur kommt, wird verringert,
- der Stillstand einer Prozesskomponente (z.B. für Wartung oder aufgrund eines Defekts) keine unmittelbaren Auswirkungen auf die gesamte Fertigungsstraße hat und die anderen Verfahrensschritte weiter produzieren können,
- nicht für jede Wickelanlage eine separate TMU-Einrichtung vorgehalten werden muss und die Flexibilität der Produktion erhöht wird, da die Auswahl der einzusetzenden Wickelanlage unabhängig von der TMU-Einrichtung erfolgen kann,
- die Bearbeitung von Federstäben mit einem inkonstanten, insbesondere variierenden Drahtdurchmesser ist mit dem erfindungsgemäßen Verfahren einfach und ohne erhöhten Aufwand möglich.

Gegenstand der Erfindung ist daher eine Feder und/oder ein Drehstab, hergestellt aus einem Stahldraht durch Warmumformen nach einem Verfahren mit den folgenden Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Ablängen des in Schritt c) abgekühlten Stahldrahts zu Stäben;
e) Erwärmen der in Schritt d) abgelängten Stäben wenigstens auf eine Umformtemperatur, wobei die Umformtemperatur eine Temperatur oberhalb der Mindestrekristallisationstemperatur des Stahldrahts, vorzugsweise gleich oder größer als die Austenitstarttemperatur ist;
f) Warmumformen der in Schritt e) erwärmten Stäbe zu einer Feder oder einem Drehstab;
g) Vergüten der in Schritt f) zu einer Feder oder einem Drehstab warmumgeformten Stäbe, umfassend
   I. Abschrecken der in Schritt f) zu einer Feder oder einem Drehstab warmumgeformten Stäbe auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   II. Wiedererwärmen der in Schritt I. abgeschreckten Feder oder des Drehstabs auf eine erste Anlasstemperatur, welche kleiner ist als die Austenitstarttemperatur;
   III. Abkühlen der in Schritt II. wiedererwärmten warmumgeformten Federstäbe auf eine zweite Abkühltemperatur, wobei die zweite Abkühltemperatur wenigstens kleiner ist als die erste Anlasstemperatur;
wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Ein weiterer Gegenstand der Erfindung ist ein Verfahren zum Herstellen einer Feder und/oder eines Drehstabs mit den Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Ablängen des in Schritt c) abgekühlten Stahldrahts zu Stäben;
e) Erwärmen der in Schritt d) abgelängten Stäben wenigstens auf eine Umformtemperatur, wobei die Umformtemperatur eine Temperatur oberhalb der Mindestrekristallisationstemperatur des Stahldrahts, vorzugsweise gleich oder größer als die Austenitstarttemperatur ist;
f) Warmumformen der in Schritt e) erwärmten Stäbe zu einer Feder oder einem Drehstab;
g) Vergüten der in Schritt f) zu einer Feder oder einem Drehstab warmumgeformten Stäbe, umfassend
   I. Abschrecken der in Schritt f) zu einer Feder oder einem Drehstab warmumgeformten Stäbe auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   II. Wiedererwärmen der in Schritt I. abgeschreckten Feder oder des Drehstabs auf eine erste Anlasstemperatur, welche kleiner ist als die Austenitstarttemperatur;
   III. Abkühlen der in Schritt II. wiedererwärmten warmumgeformten Federstäbe auf eine zweite Abkühltemperatur, wobei die zweite Abkühltemperatur wenigstens kleiner ist als die erste Anlasstemperatur;
   wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Das erfindungsgemäße Verfahren ist dadurch gekennzeichnet, dass der Draht (falls das Ablängen nach dem Abkühlen erfolgt) oder der Federstab (falls das Ablängen vor dem Abkühlen erfolgt) nach der thermomechanischen Umformung auf eine Temperatur unterhalb von 200°C derart abgekühlt wird, dass sich im abgekühlten Draht bzw. Federstab ein perlitisch-ferritisches Gefüge einstellt. Durch die Bildung des perlitisch-ferritischen Gefüges wird der Draht bzw. Federstab in einen Zwischenzustand versetzt, in dem er sich durch eine hohe Weichheit und damit auch eine gute Handhabbarkeit auszeichnet. Aufgrund dieser Weichheit lässt sich eine prozesstechnische Trennung der TMU von dem nachfolgenden Warmformen und Vergüten erreichen. In der Zeit zwischen der TMU und dem Warmformen bzw. Vergüten lässt sich der Draht bzw. Federstab deutlich besser handhaben, da er nicht in einer gehärteten Form vorliegt. So kann der Draht bzw. der Federstab nun separat weiteren Verarbeitungsschritten unterzogen werden, beispielsweise ein Ziehen, ein Feinschleifen oder ein exaktes Zuschneiden. Dies ist auch verbessert möglich, da der Draht bzw. Federstab in diesem Zustand aufgrund der TMU zwar schon ein feines Gefüge aufweist, dennoch aber weich und kalt ist und damit gut verarbeitbar ist.

Ein weiterer Gegenstand der Erfindung ist die Verwendung eines Stahldrahts zur Herstellung von warmgeformten Federn und/oder Drehstäben mit den Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Ablängen des in Schritt c) abgekühlten Stahldrahts zu Stäben;
e) Erwärmen der in Schritt d) abgelängten Stäben wenigstens auf eine Umformtemperatur, wobei die Umformtemperatur eine Temperatur oberhalb der Mindestrekristallisationstemperatur des Stahldrahts, vorzugsweise gleich oder größer als die Austenitstarttemperatur ist;
f) Warmumformen der in Schritt e) erwärmten Stäbe zu einer Feder oder einem Drehstab;
g) Vergüten der in Schritt f) zu einer Feder oder einem Drehstab warmumgeformten Stäbe, umfassend
   I. Abschrecken der in Schritt f) zu einer Feder oder einem Drehstab warmumgeformten Stäbe auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   II. Wiedererwärmen der in Schritt I. abgeschreckten Feder oder des Drehstabs auf eine erste Anlasstemperatur, welche kleiner ist als die Austenitstarttemperatur;
   III. Abkühlen der in Schritt II. wiedererwärmten warmumgeformten Federstäbe auf eine zweite Abkühltemperatur, wobei die zweite Abkühltemperatur wenigstens kleiner ist als die erste Anlasstemperatur;
wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Durch die Bildung des perlitischen-ferritischen Gefüges wird der Draht in einen Zwischenzustand versetzt, in dem sich der Draht durch eine hohe Weichheit und damit auch eine gute Handhabbarkeit auszeichnet. Aufgrund dieser Weichheit lässt sich eine prozesstechnische Trennung der TMU von dem nachfolgenden Vergüten erreichen. In der Zeit zwischen der TMU und dem Vergüten lässt sich der Draht deutlich besser handhaben, da er nicht in einer gehärteten Form vorliegt.

Die Erfindung kann sowohl in einer Feder als auch einem Drehstab, sowie in einem erfindungsgemäßen Federdraht, als auch in einem Verfahren zum Herstellen der Feder und/oder des Drehstabs, als auch des Federdrahts, sowie in der Verwendung eines Stahldrahts zur Herstellung der Feder und/oder des Drehstabs verwirklicht sein.

### Detaillierte Beschreibung der Erfindung

Im Rahmen der vorliegenden Erfindung wird unter einer Feder ein Bauteil aus einem Stahldraht verstanden, welches unter Belastung nachgibt und nach Entlastung in die ursprüngliche Gestalt zurückkehrt. Insbesondere kann eine Feder ein aus Stahldraht schrauben- oder spiralförmig gewickeltes oder stabförmig gestrecktes oder abgeknicktes Bauteil sein. Beispiele für Federn sind ausgewählt aus einer Gruppe von Schraubenfedern, insbesondere Schraubendruckfedern, Schraubenzugfedern, Kegelfedern, Sprungfedern, Biegefedern, insbesondere Spiralfedern, gewundenen Torsionsfedern und Kombinationen hiervon.

Im Rahmen der vorliegenden Erfindung wird unter einem Drehstab ein Stabelement verstanden, bei welchem bei fester Einspannung an beiden Enden, die befestigten Enden gegeneinander eine Schwenkbewegung um die Stabelementachse ausführen. Insbesondere findet die mechanische Beanspruchung maßgeblich durch ein tangential zur Stabelementachse angreifendes Drehmoment statt. Unter Drehstäben werden beispielsweise auch ein gerader Torsionsstab, ein gewinkelter Torsionsstab, eine Drehstabfeder, eine Torsionsfeder, ein Stabilisierungsdrehstab, ein Stabilisator, ein geteilter Stabilisator und Kombinationen hiervon verstanden.

Unter Warmumformen im Rahmen der vorliegenden Erfindung wird verstanden, wenn der Stahldraht oberhalb der Rekristallisationstemperatur verformt wird. Insbesondere rekristallisiert der Werkstoff, wie beispielsweise Stahl während oder unmittelbar nach der Warmumformung, wodurch der Werkstoff seine ursprünglichen Eigenschaften wieder zurück erhält. Insbesondere werden bei der TMU die Eigenschaften des Werkstoffs verbessert. Beispielsweise wird bei der Warmumformung von einer verformungssimultanen Rekristallisation des Werkstoffgefüges gesprochen. Beispiele für ein Warmumformen sind Warmwickeln, Warmbiegen und Kombinationen hiervon.

Die Rekristallisationstemperatur ist diejenige Glühtemperatur, die bei einem kaltverformten Gefüge mit vorgegebenem Verformungsgrad in einem begrenzten Zeitraum zu einer vollständigen Rekristallisation führt. Die Rekristallisationstemperatur besitzt keinen festen Wert, sondern ist abhängig von der Höhe der vorangegangenen Kaltverformung und der Schmelztemperatur des Werkstoffs, insbesondere der Schmelztemperaturen von Stählen. Beispielsweise ist bei Stählen die Rekristallisationstemperatur auch abhängig von dem Kohlenstoffgehalt und der Legierung des jeweiligen Stahles.

Als Mindestrekristallisationstemperatur wird die unterste Temperatur verstanden, bei der eine Rekristallisation, insbesondere eine Rekristallisation des Gefüges eines Stahldrahts, noch erfolgt.

Unter Austenitstarttemperatur wird im Rahmen der Erfindung eine Temperatur verstanden, bei welcher eine Umwandlung in ein wenigstens teilweises austenitisches Gefüge erfolgt. Insbesondere erfolgt bei einer Austenitisierungstemperatur eine Umwandlung in ein wenigstens teilweises austenitisches Gefüge.

Ein Vergüten im Sinne der vorliegenden Erfindung kann ein teilweises oder vollständiges Vergüten sein.

Unter einer Wärmeübertragung, wie diese beispielweise in Schritt b) bei dem thermomechanischen Umformen, in Schritt e) bei dem Erwärmen, in Schritt g)II. beim dem Wiedererwärmen und/oder einer anderen Wärmeübertragung im Rahmen der Erfindung erfolgt, wird eine solche verstanden, welche ausgewählt ist unter einer Wärmeleitung, insbesondere einer konduktiven Erwärmung, einer Wärmestrahlung, insbesondere einer Infrarot-Strahlung, einer induktiven Erwärmung, einer Konvektion, insbesondere einem Heizgebläse und Kombinationen hiervon.

Ein Stabilisator wird im Rahmen der Erfindung auch als ein Stabilisierungsdrehstab verstanden. Insbesondere werden auch Abschnitte von Stabilisatoren und/oder geteilte Stabilisatoren als erfindungsgemäße Stabilisatoren verstanden.

Unter dem Wiedererwärmen in Schritt g)II. mit dem nachfolgenden Abkühlen in Schritt g)III. wird ein Anlassen verstanden.

In einer bevorzugten Ausführungsform der Erfindung wird die Herstellung der Feder und/oder des Drehstabs mit einem Stahldraht aufweisend einen Kohlenstoffgehalt im Bereich von 0,02 bis 0,8 Gew.-% durchgeführt. Insbesondere werden im Rahmen der Erfindung unter Stählen, aufweisend einen Kohlenstoffgehalt im Bereich von 0,02 bis 0,8 Gew.-% untereutektoide Stähle verstanden.

In einer bevorzugten Ausführungsform der Erfindung ist die Reihenfolge der Schritte c) und d) und/oder der Schritte d) und e) beliebig.

In einer bevorzugten Ausführungsform der Erfindung erfolgt das Thermomechanische Umformen in Schritt b) bei einer Temperatur, welche gleich oder größer der Austenitstarttemperatur, vorzugsweise gleich oder größer der Austenitendtemperatur, besonders bevorzugt im Bereich von der Austenitendtemperatur bis 50 °C größer als die Austenitendtemperatur ist.

Unter Austenitendtemperatur wird im Rahmen der Erfindung eine Temperatur verstanden, bei welcher die Umwandlung in ein austenitisches Gefüge abgeschlossen ist.

So ist in einer bevorzugten Ausgestaltung vorgesehen, dass in diesem Zwischenzustand, also nach der TMU und vor der Vergütung, der Draht, der nun immer noch in einem fortlaufenden Draht vorhanden ist, zu Lager- oder Transportzwecken aufgerollt, insbesondere aufgehaspelt wird. Dies ist umso leichter möglich, je weicher der Draht ist. Für das nachfolgende Vergüten wird der Draht wieder abgehaspelt. Das nachfolgende Vergüten ist so vollständig von der TMU entkoppelt.

Der erfindungsgemäße Verfahrensablauf ermöglicht es auch, die Vergütung im Hinblick auf den Temperaturbereich von der TMU zu entkoppeln. Während die optimale Umformtemperatur während der TMU knapp oberhalb der Austenitisierungstemperatur des Drahtwerkstoffs, insbesondere weniger als 50°C oberhalb der Austenitisierungstemperatur des Drahtwerkstoffs liegt, ist für die Vergütung ein Erhitzen auf wesentlich höhere Temperaturen vorteilhaft. So ist in einer bevorzugten Ausgestaltung vorgesehen, dass die Vergütungstemperatur oberhalb der Umformtemperatur liegt, insbesondere mehr als 50°C oberhalb der Austenitisierungstemperatur des Drahtwerkstoffs. Durch die prozesstechnische Trennung von TMU und Vergütung kann für jeden der beiden Schritte die optimale Temperatur eingestellt werden.

Ein weiterer Vorteil des erfindungsgemäßen Verfahrensablaufs ist es, dass durch die Entkopplung der beiden Prozesse Vergüten und TMU beide Prozesse bei für den jeweiligen Prozess optimalen (benötigten) Durchlaufgeschwindigkeiten des Drahtes durchgeführt werden können. Die Durchlaufgeschwindigkeit des Drahtes bei der TMU ist nicht zwingend die selbe, wie bei der Vergütung. Bei der integralen Fertigungsstraße hingegen gibt der langsamere der beiden Prozesse die Durchlaufgeschwindigkeit für beide Prozesse vor, d.h., einer der beiden Prozesse arbeitet nicht bei optimalen Bedingungen, also unwirtschaftlich.

Die Stahlfeder weist nach dem Warmumformen bevorzugt noch eine Temperatur oberhalb der Austenitstarttemperatur auf. Falls die Stahlfeder nach dem Warmumformen eine Temperatur gleich oder weniger der Austenitstarttemperatur aufweist, erfolgt ein erneutes Erhitzen der Stahlfeder auf eine Temperatur oberhalb der Austenitstarttemperatur. Ausgehend von dieser Temperatur oberhalb der Austenitstarttemperatur kann dann das Abschrecken im Rahmen der Vergütung erfolgen.

Vorzugsweise erfolgt das Abschrecken aber ohne zwischenzeitliche Abkühlung unter die Austenitisierungstemperatur nach dem Warmumformen. Die Prozesswärme aus dem Warmumformungsverfahren wird somit für das Vergüten genutzt.

Dieses Verfahren wird bevorzugt durchgeführt bei der Herstellung von warmgeformten Stahlfedern, bei denen die einzelnen Federstäbe vor dem Warmumformen von dem Draht getrennt werden.

Bevorzugt wird das Verfahren angewendet bei der Herstellung von warmgeformten Schraubenfedern. Hierbei wird der Federstab zu Stahlfedern warmgewickelt; erst nach dem Warmwinden wird die Schraubenfeder vergütet.

Ebenfalls bevorzugt wird das Verfahren angewendet bei der Herstellung von warmgeformten Drehstabfedern. Hierbei wird der Federstab durch Warmbiegen zu Drehstabfedern, insbesondere Stabilisatoren für Kraftfahrzeugfahrwerke, weiterverarbeitet; erst nach dem Warmbiegen wird die Drehstabfeder vergütet.

In einer bevorzugten Ausführungsform der Erfindung erfolgt das Abkühlen des Drahts in Schritt c) wenigstens auf eine Temperatur unterhalb der Mindestrekristallisationstemperatur, vorzugsweise unterhalb einer Temperatur von 200 °C, besonders bevorzugt unterhalb einer Temperatur von 90 °C.

Die Abkühlung nach der TMU erfolgt bevorzugt mit einer so geringen Abkühlgeschwindigkeit, dass sichergestellt wird, dass sich ein perlitisch-ferritisches Gefüge einstellt. Der Fachmann kann hierzu das zum Werkstoff passenden ZTU-Schaubild heranziehen, aus dem sich die Abkühlgeschwindigkeit ablesen lässt.

Grundsätzlich erscheint die vorgeschlagene Vorgehensweise gegenüber dem bekannten Verfahren zwar unwirtschaftlich zu sein, da nunmehr der Draht für das Warmumformverfahren erneut erwärmt werden muss, nachdem die zwischenzeitliche Abkühlung erfolgt ist. Es hat sich aber herausgestellt, dass durch die damit erreichte Entkopplung die eingangs genannten Nachteile vermieden werden können, was technisch besser und wirtschaftlich vorteilhafter zu bewerten ist als die durch die integrale Fertigung bedingten Vorteile. Ferner kann die zwischenzeitliche Abkühlung auch gezielt unter Mitwirkung eines Wärmetauschers erfolgen, wodurch die Abwärme des Abkühlens wiederum der TMU oder der anschließenden Vergütung mit einem recht hohen Wirkungsgrad zur Verfügung stehen kann.

Erfindungsgemäß kann nun ein bereits vorbehandelter Draht zur Herstellung von warmgeformten Stahlfedern, insbesondere Schraubenfedern oder Drehstabfedern aus Stahl, verwendet werden. Der Draht weist eine Temperatur von weniger als 200°C, insbesondere Raumtemperatur, auf. Ferner ist der Draht bereits einer thermomechanischen Umformung unterzogen worden und weist ein perlitisch-ferritisches Gefüge auf. Zudem wurde der Stahldraht zu Stäben abgelängt. Diese Stäbe werden nun vergütet, wobei das Vergüten folgende Schritte umfasst: ein Erhitzen des Drahts auf eine Vergütungstemperatur oberhalb der Austenitisierungstemperatur des Drahtwerkstoffs und Austenitisierung. Anschließend erfolgt das Warmumformen der Stäbe zur Erzeugung der warmgeformten Stahlfeder und danach ein Abschrecken der auf Vergütungstemperatur erhitzten Stäbe zur Bildung eines martensitischen Gefüges im Stab; ein Anlassen des Drahts. Die bezüglich des Verfahrens genannten Vorteile und Weiterbildungen sind auf diese Verwendung anwendbar.

In einer bevorzugten Ausführungsform der Erfindung erfolgt das Erwärmen der Stäbe in Schritt e) auf eine Temperatur, welche gleich oder größer der Austenitstarttemperatur, vorzugsweise gleich oder größer der Austenitendtemperatur, besonders bevorzugt im Bereich von der Austenitendtemperatur bis 50 °C größer als die Austenitendtemperatur ist.

In einer bevorzugten Ausführungsform der Erfindung erfahren bei dem Abschrecken in Schritt g)I. der in Schritt f) warmumgeformten Feder oder des Stabs das Feder- oder Stabgefüge eine wenigstens teilweise Umwandlung in Martensit erfahren und die Feder oder der Stab wenigstens eine Martensitstarttemperatur erfahren, wobei das Abschrecken der warmumgeformten Feder oder des Stabs vorzugsweise auf die erste Abkühltemperatur des Stahldrahts von kleiner oder gleich 200 °C erfolgt.

Unter Martensitstarttemperatur wird im Rahmen der Erfindung eine Temperatur verstanden, bei welcher eine Umwandlung in ein wenigstens teilweises martensitisches Gefüge erfolgt.

In einer bevorzugten Ausführungsform der Erfindung wird mit dem Vergüten der zu einer Feder oder einem Drehstab warmumgeformten Stäbe in Schritt g) der Härteverlauf über den Querschnitt des Stahldrahtes eingestellt. Beispielsweise kann die Härte des Stahldrahts von dem Rand zu dem Kern des Stahldrahts variieren. Insbesondere kann die Härte von dem Rand zu dem Kern des Stahldrahts abfallen oder ansteigen oder auch gleichgroß sein. Vorzugsweise fällt die Härte von dem Rand zu dem Kern des Stahldrahts ab. Beispielsweise kann dies durch Randerwärmen des Stahldrahts mit anschließendem Wiederabkühlen im Anschluss an einen der Schritte d) bis g) erfolgen.

In einer bevorzugten Ausführungsform der Erfindung wird im Anschluss an Schritt g) in einem weiteren Schritt h) ein Randerwärmen und nachfolgendes Wiederabkühlen der zu einer Feder oder einem Drehstab warmumgeformten Stäbe durchgeführt, wobei die Härte von dem Rand zu dem Kern der warmumgeformten Federstäbe ansteigt.

In einer bevorzugten Ausführungsform der Erfindung wird im Anschluss an Schritt c) in einem weiteren Schritt i) der Stahldraht aufgehaspelt.

In einer bevorzugten Ausführungsform der Erfindung wird im Anschluss an einen der Schritte c) bis g) in einem weiteren Schritt k) ein Warmstrahlen des Stahldrahts und/oder der zu einer Feder oder einem Drehstab warmumgeformten Stäbe bei einer Warmstrahltemperatur, welche kleiner ist als die erste Anlasstemperatur, insbesondere in einem Warmstrahltemperaturbereich von 150 °C bis 500 °C durchgeführt.

In einer bevorzugten Ausführungsform der Erfindung wird im Anschluss an einen der Schritte c) bis g) in einem weiteren Schritt j) eine Oberflächenbehandlung des Stahldrahts und/oder der zu einer Feder oder einem Drehstab warmumgeformten Stäbe durchgeführt wird, bei welcher die Oberfläche des Stahldrahts und/oder der zu einer Feder oder einem Drehstab warmumgeformten Stäbe wenigstens teilweise abgetragen.

In einer bevorzugten Ausführungsform der Erfindung weist die hergestellte Feder und/oder der Drehstab einen Martensitanteil von größer 40 Vol.-%, vorzugsweise größer als 80 Vol.-%, besonders bevorzugt größer als 90 Vol.-%, ganz besonders bevorzugt größer als 95 Vol.-% auf.

In einer bevorzugten Ausführungsform der Erfindung wird das Verfahren mit einem Stahldraht mit einem Kohlenstoffgehalt im Bereich von 0,02 bis 0,8 Gew.-% durchgeführt.

In einer bevorzugten Ausführungsform der Erfindung wird zur Herstellung von warmgeformten Federn und/oder Drehstäben ein Stahldraht, welcher einen Kohlenstoffgehalt im Bereich von 0,02 bis 0,8 Gew.-% aufweist, verwendet.

### Bevorzugtes Ausführungsbeispiel der Erfindung

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung des erfindungsgemäßen Verfahrens gemäß einer Ausführungsform der Erfindung,
- Fig. 2: einen Temperaturverlauf zu der Ausführungsform nach Figur 1,
- Fig. 3: eine schematische Darstellung eines Verfahrens nach dem Stand der Technik.

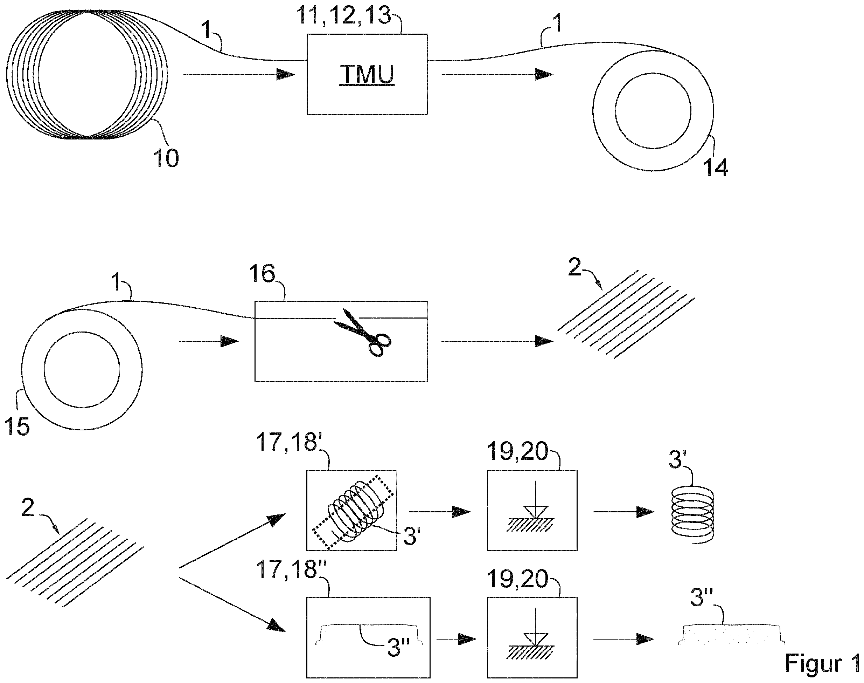

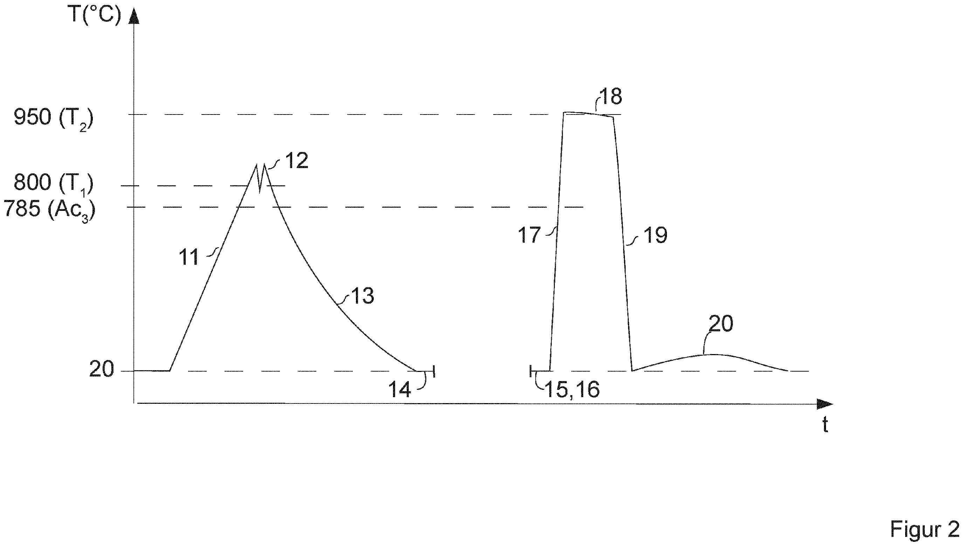

Die Figuren 1 und 2 werden nachfolgend gemeinsam beschrieben. Ein gewickelter Stahldraht 1 wird auf einem Ring 10 bereitgestellt. Dieser wird zunächst erwärmt auf eine erste Umformtemperatur T₁ von etwa 800°C, was oberhalb Mindestrekristallisationstemperatur des Stahldraht 1s, insbesondere oberhalb der Austenitisierungstemperatur Ac₃ von im vorliegenden Fall 785°C, 11 liegt. Nun wird der Stahldraht 1 einer thermomechanischen Umformung 12 unterzogen. Das Erhitzen 11 kann entfallen, wenn sich die TMU unmittelbar an einen Stahldrahtwalzprozess anschließt und die Temperatur des Stahldraht 1s bereits auf der gewünschten Umformtemperatur T₁ liegt.

Das thermomechanische Umformen 12 kann durch mehrstufiges Kaliberwalzen erfolgen. Anschließend wird der Stahldraht 1 derart langsam abgekühlt 13, dass sich im Stahldraht 1 ein perlitisch-ferritisches Gefüge, also ein weiches Gefüge, einstellt. Das Abkühlen kann ohne weitere Einwirkung durch einfaches Lagern in Raumtemperatur oder Umgebungstemperatur erfolgen, bevorzugt erfolgt das Abkühlen aber kontrolliert. Das Abkühlen kann zusätzlich oder alternativ auch während oder nach dem Aufhaspeln 14 des Stahldrahts 1 erfolgen, was aufgrund des weichen Gefügezustands ohne weiteres möglich ist. Zum Abkühlen kann ein Wärmetauscher bereitgestellt werden, so dass die Abwärme dem Prozess wieder zugeführt werden kann.

Wenn der Stahldraht 1 nun aufgehaspelt ist, kann er von einer Verarbeitungsstelle zur nächsten Verarbeitungsstelle transportiert und dort weiterverarbeitet werden. In der Figur 2 ist dies durch eine Lücke im Temperaturverlauf nach dem Aufhaspeln 14 verdeutlicht. Ein Federhersteller kann nun den durch thermomechanische Umformung 12 vorbehandelten Stahldraht 1 von einem Stahldrahthersteller zukaufen und muss nicht die für die TMU erforderlichen Anlagen bei sich vorhalten. Dies spart dem Federhersteller Platz und Investitionskosten ein.

Nach einem beliebigen Zeitraum der Lagerung und/oder des Transports beginnt das Warmumformen 18', 18" und Vergüten des Stahldrahts 1, welches sich folglich nicht mehr unmittelbar (auch örtlich) an die TMU anschließen muss. Nach einem Abhaspeln 15 wird der Stahldraht 1 in einzelne Stäbe 2 geschnitten 16. Im Zusammenhang mit dem Schneiden des Stahldrahts 1 können am Stahldraht 1 oder am geschnittenen Stab 2 noch weitere Bearbeitungsschritte durchgeführt werden, beispielsweise ein Reinigen, Richten, Schleifen und/oder Schälen.

Anschließend wird zur Vorbereitung des Warmumformens 18', 18" der Stab 2 auf eine zweite Umformtemperatur T₂ oberhalb der Austenitisierungstemperatur Ac₃ erhitzt 17. Im vorliegenden Fall liegt die zweite Umformtemperatur T₂ bei etwa 950°C. Das Erhitzen erfolgt sehr schnell und wird vorzugsweise induktiv oder konduktiv durchgeführt. Die Erhitzung erfolgt mit einer Heizgeschwindigkeit von mindestens 50 K/s, vorzugsweise mindestens 100 K/s. Anschließend wird der Stab 2 zur Schraubenfeder 3' warmgewickelt 18' oder zur Drehstab 3" warmgebogen 18". Ohne wesentliche Änderung der Temperatur (wobei sich die Temperatur der Feder 3 durchaus während der Warmumformung 18', 18" und vor der Abschreckung leicht reduzieren kann) erfolgt das Abschrecken 19, z.B. in einem Ölbad, wodurch sich ein martensitisches Gefüge in der erzeugten Feder 3 einstellt. Anschließend wird die Feder 3 angelassen 20.

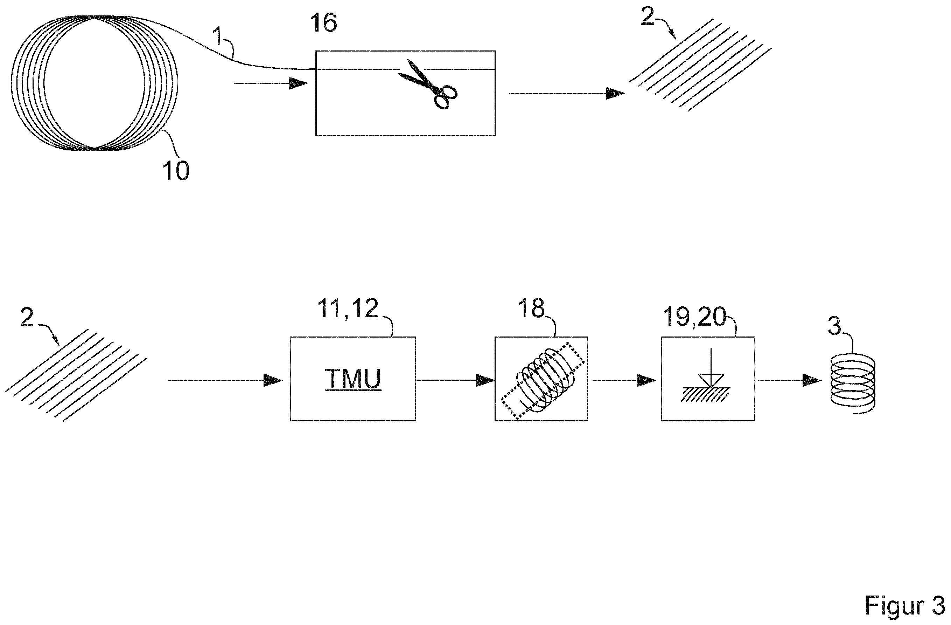

Das Verfahren nach dem Stand der Technik wird in Figur 3 schematisch dargestellt. Abweichend zum erfindungsgemäßen Konzept erfolgte das Schneiden zu den Stäben 2 vor der Durchführung der TMU. Die TMU 12 wurde in einer integralen Fertigungsstraße gemeinsam mit dem Warmumformen 18, 18', 18" und dem Abschrecken 19 durchgeführt. Der für die TMU erhitzte Stahldraht 1 wurde bis zum Abschrecken auf einer Temperatur oberhalb der Austenitisierungstemperatur gehalten.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Gewerbliche Anwendbarkeit

Federn und/oder Drehstäbe der vorbeschriebenen Art werden beispielsweise in der Produktion von Kraftfahrzeugen, insbesondere von Fahrwerken der Kraftfahrzeuge eingesetzt.

### Bezugszeichenliste

- 1: Stahldraht
- 2: Stab
- 3: Feder
- 3': Schraubenfeder
- 3": Drehstab
- 10: Ring
- 11: Erhitzen
- 12: Thermomechanisches Umformen (TMU)
- 13: Abkühlen
- 14: Aufhaspeln
- 15: Abhaspeln
- 16: Ablängen
- 17: Erhitzen
- 18: Warmumformen
- 18': Warmwickeln
- 18": Warmbiegen
- 19: Abschrecken
- 20: Anlassen

## Patentansprüche

1. Feder (3') oder Drehstab (3") hergestellt aus einem Stahldraht (1) durch Warmumformen (18, 18', 18") nach einem Verfahren mit den folgenden Schritten:
a) Bereitstellen eines Stahldrahts (1);
b) Thermomechanisches Umformen (12) des in Schritt a) bereitgestellten Stahldrahts (1), oberhalb der Mindestrekristallisationstemperatur des Stahldrahts (1), wobei der Stahldraht (1) ein wenigstens teilweise austenitisches Gefüge aufweist;
c) Abkühlen (13) des in Schritt b) thermomechanisch umgeformten Stahldrahts (1);
d) Ablängen (16) des in Schritt c) abgekühlten Stahldrahts (1) zu Stäben (2);
e) Erwärmen (17) der in Schritt d) abgelängten Stäbe (2) wenigstens auf eine Umformtemperatur (T2), wobei die Umformtemperatur (T2) eine Temperatur oberhalb der Mindestrekristallisationstemperatur des Stahldrahts (1), vorzugsweise gleich oder größer als die Austenitstarttemperatur ist;
f) Warmumformen (18, 18', 18") der in Schritt e) erwärmten Stäbe (2) zu einer Feder (3') oder einem Drehstab (3");
g) Vergüten der in Schritt f) zu einer Feder (3') oder einem Drehstab (3") warmumgeformten Stäbe, umfassend
I. Abschrecken (19) der in Schritt f) zu einer Feder (3') oder einem Drehstab (3") warmumgeformten Stäbe auf eine erste Abkühltemperatur, wobei die erste Abkühltemperatur eine Temperatur unterhalb der Mindestrekristallisationstemperatur des Stahldrahts (1) ist und sich ein wenigstens teilweise martensitisches Gefüge einstellt, wobei die Feder oder der Drehstab einen Martensitanteil von größer 40 Vol-% aufweisen;
II. Wiedererwärmen der in Schritt I. abgeschreckten Feder (3') oder des Drehstabs (3") auf eine erste Anlasstemperatur, welche kleiner ist als die Austenitstarttemperatur;
III. Abkühlen der in Schritt II. wiedererwärmten warmumgeformten Feder (3') oder Stabs (2) auf eine zweite Abkühltemperatur, wobei die zweite Abkühltemperatur wenigstens kleiner ist als die erste Anlasstemperatur;
**dadurch gekennzeichnet, dass**
beim Abkühlen (13) des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.

2. Feder (3') oder Drehstab (3") nach Anspruch 1, **dadurch gekennzeichnet, dass** die Reihenfolge der Schritte c) und d) und/oder der Schritte d) und e) beliebig ist.

3. Feder (3') oder Drehstab (3") nach einem der Ansprüche 1 bis 2, **dadurch gekennzeichnet, dass** das Thermomechanische Umformen in Schritt b) bei einer Temperatur, welche gleich oder größer der Austenitstarttemperatur, vorzugsweise gleich oder größer der Austenitendtemperatur, besonders bevorzugt im Bereich von der Austenitendtemperatur bis 50 °C größer als die Austenitendtemperatur ist, erfolgt.

4. Feder (3') oder Drehstab (3") nach einem der Ansprüche 1 bis 3, **dadurch gekennzeichnet, dass** das Abkühlen (13) des Drahts in Schritt c) wenigstens auf eine Temperatur unterhalb der Mindestrekristallisationstemperatur, vorzugsweise unterhalb einer Temperatur von 200 °C, besonders bevorzugt unterhalb einer Temperatur von 90 °C, erfolgt.

5. Verwendung eines Stahldrahts (1) zur Herstellung von warmgeformten Federn (3') und/oder Drehstäben (3") nach einem der Ansprüche 1 bis 4 mit den Schritten:
a) Bereitstellen eines Stahldrahts (1);
b) Thermomechanisches Umformen (12) des in Schritt a) bereitgestellten Stahldrahts (1), oberhalb der Mindestrekristallisationstemperatur des Stahldrahts (1), wobei der Stahldraht (1) ein wenigstens teilweise austenitisches Gefüge aufweist;
c) Abkühlen (13) des in Schritt b) thermomechanisch umgeformten Stahldrahts (1);
d) Ablängen (16) des in Schritt c) abgekühlten Stahldrahts (1) zu Stäben (2);
e) Erwärmen (17) der in Schritt d) abgelängten Stäbe (2) wenigstens auf eine Umformtemperatur (T2), wobei die Umformtemperatur (T2) eine Temperatur oberhalb der Mindestrekristallisationstemperatur des Stahldrahts (1), vorzugsweise gleich oder größer als die Austenitstarttemperatur ist;
f) Warmumformen (18, 18', 18") der in Schritt e) erwärmten Stäbe (2) zu einer Feder (3') oder einem Drehstab (3");
g) Vergüten der in Schritt f) zu einer Feder (3') oder einem Drehstab (3") warmumgeformten Stäbe, umfassend
I. Abschrecken (19) der in Schritt f) zu einer Feder (3') oder einem Drehstab (3") warmumgeformten Stäbe auf eine erste Abkühltemperatur, wobei die erste Abkühltemperatur eine Temperatur unterhalb der Mindestrekristallisationstemperatur des Stahldrahts (1) ist und sich ein wenigstens teilweise martensitisches Gefüge einstellt, wobei die Feder oder der Drehstab einen Martensitanteil von größer 40 Vol-% aufweisen;
II. Wiedererwärmen der in Schritt I. abgeschreckten Feder (3') oder des Drehstabs (3") auf eine erste Anlasstemperatur, welche kleiner ist als die Austenitstarttemperatur;
III. Abkühlen der in Schritt II. wiedererwärmten warmumgeformten Feder (3') oder Stabs (2) auf eine zweite Abkühltemperatur, wobei die zweite Abkühltemperatur wenigstens kleiner ist als die erste Anlasstemperatur;
**dadurch gekennzeichnet, dass**
beim Abkühlen (13) des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.
